# EUROPEAN PATENT SPECIFICATION

(11) **EP 0 958 235 B1**
(45) Date of publication and mention of the grant of the patent: **05.02.2003**
(21) Application number: 97923206.3
(22) Date of filing: 19.05.1997
(51) Int. Cl.: B67D 5/04

(54) **APPARATUS FOR DISPENSING FUEL AND DETECTING A VEHICLE HAVING A VAPOUR RECOVERY SYSTEM**
KRAFTSTOFFABGABEVORRICHTUNG MIT MITTELN ZUR ERKENNUNG EINES DAMPFRÜCKGEWINNUNGSSYSTEMS EINES FAHRZEUGS
APPAREIL DE DISTRIBUTION DE CARBURANT ET DE DETECTION D'UN VEHICULE EQUIPE D'UN SYSTEME DE RECUPERATION DES VAPEURS

(30) Priority: 17.05.1996 US 649455
(43) Date of publication of application: 24.11.1999
(73) Proprietor: Marconi Commerce Systems Inc., Greensboro, North Carolina 27420 (US)
(72) Inventor: HARTSELL, Hal, C., Kernersville, NC 27284 (US); PAYNE, Edward, A., Greensboro, NC 27410 (US); MILLER, Paul, D., Winston-Salem, NC 27101 (US); TUCKER, Mark, B., Colfax, NC 27235 (US)
(74) Representative: Fitchett, Stuart Paul
(86) International application number: PCT/GB97/01374
(87) International publication number: WO 97/044274

(56) References cited:
- EP-A- 0 653 376
- DE-A- 4 413 302
- US-A- 5 165 379

## Description

The present invention relates to apparatus for dispensing fuel incorporating vapour recovery systems, more particularly, to a fuel dispenser vapour recovery system capable of detecting the presence of an onboard vapour recovery system in an automobile.

For the past several years, the Environmental Protection Agency has been proposing various regulations to limit the amount of fuel vapour released into the atmosphere during the refuelling of a motor vehicle. During a conventional fuelling operation, incoming fuel displaces fuel vapour from the head space of a fuel tank and out through the filler pipe into the atmosphere if not contained and recovered. The air pollution resulting from this situation is undesirable. Currently, many fuel dispensing pumps at service stations are equipped with vapour recovery systems that collect fuel vapour vented from the fuel tank filler pipe during the fuelling operation and transfer the vapour to a fuel storage tank.

Recently, onboard, or vehicle carried, fuel vapour recovery and storage systems (commonly referred to as onboard recovery vapour recovery or ORVR) have been developed in which the head space in the vehicle fuel tank is vented through a charcoal-filled canister so that the vapour is absorbed by the charcoal. Subsequently, the fuel vapour is withdrawn from the canister into the engine intake manifold for mixture and combustion with the normal fuel and air mixture. This addresses a problem of the discharge of fuel vapour through the atmospheric vent of the tank when ambient pressure and temperature conditions are such that vapour pressure within the fuel tank exceeds atmospheric pressure.

In typical ORVR systems, a canister outlet is connected to the intake manifold of the vehicle engine through a normally closed purge valve. The canister is intermittently subjected to the intake manifold vacuum with the opening and closing of the purge valve between the canister and intake manifold. A computer which monitors various vehicle operating conditions controls the opening and closing of the purge valve to assure that the fuel mixture established by the fuel injection system is not overly enriched by the addition of fuel vapour from the canister to the mixture.

Unnecessarily running a vapour recovery system as though a vehicle were not equipped with ORVR when the vehicle is equipped with ORVR will waste energy, increase wear and tear, ingest excessive air into the underground storage tank and cause excessive pressure buildup in the underground storage tank due to the expanded volume of hydrocarbon saturated air. The problem of incompatibility of assisted vapour recovery and ORVR was discussed in "Estimated Hydrocarbon Emissions of Phase II and Onboard Vapour Recovery Systems" dated April 12, 1994, amended May 24, 1994, by the California Air Resources Board.

Another vapor recovery system is shown in EP 0 653 376 A

According to a first aspect of the present invention there is provided apparatus for dispensing fuel and detecting a vehicle having a vapour recovery system, the apparatus comprising: a fuel dispenser configured to deliver fuel to a fuel tank of a vehicle; a vapour recovery system operatively associated with said fuel dispenser having a vapour path for removing fuel vapour expelled from the fuel tank of the vehicle during a fuelling operation and a vapour recovery controller; and a vapour sensor associated with said vapour path for sensing the fuel vapours in said vapour path and providing a vapour signal to said vapour recovery controller, said controller being adapted to determine whether or not the vehicle has a vapour recovery system.

By employing fuel dispensing apparatus which can detect whether a vehicle has a vapour recovery system onboard, in accordance with the present invention, it is possible to eliminate the redundancy associated with operation of two vapour recovery systems for one fuelling operation. Adjusting the fuel dispensers vapour recovery system accordingly will mitigate emissions by reducing underground tank pressure. This in turn minimises the "breathing" associated with pressure differentials between the underground tank and ambient pressure levels.

Advantageously the controller is arranged to determine whether the vehicle has an onboard vapour recovery system from the vapour level sent by said detector, which will normally be a hydrocarbon sensor. The absence of hydrocarbons in the vapour passage 8 shortly after fuelling has commenced indicates the presence of an onboard vapour recovery system in the vehicle being fuelled.

The controller can be configured to determine whether or not the vehicle has a vapour recovery system and to shut-off the vapour recovery system if such an onboard vapour recovery system is detected. Alternatively the controller may be arranged to adjust the vapour recovery system during the fuelling operation according to said vapour signal.

The controller may be configured to control the vapour recovery rate in conjunction with the onboard vapour recovery system to maximise fuel vapour recovery.

It may be advantageous where a vehicle is detected with an onboard vapour recovery system to run the vapour recovery system at a reduced rate so that the vapour recovery system continues to monitor for vapours in said vapour path for checking purposes, such as assuring a mistake was not made in initial identification of the ORVR equipped vehicle or to determine if the vehicle vapour recovery system fails.

Advantageously where an ORVR is detected a vapour recovery system continues to pull in an amount of air and/or hydrocarbon vapour air mixture to reduce breathing losses from a tank from which fuel is received by the dispenser so that when saturated with hydrocarbons the volume of air and/or hydrocarbons expands to a volume approximately equal to the volume of fuel dispensed. Adjusting the fuel dispenser vapour recovery system in this manor minimises breathing losses associated with the underground tank.

According to the second aspect the present invention provides apparatus for dispensing fuel and detecting a vehicle having a vapour recovery system comprising: a fuel dispenser configured to deliver fuel to a fuel tank of a vehicle; a vapour recovery system having a vapour recovery path operatively associated with said fuel dispenser for removing fuel vapour expelled from the fuel tank of the vehicle during a fuelling operation and a vapour recovery controller; and a pressure sensor operatively associated with said fuel dispenser for sensing an increase in vacuum in said vapour recovery path due to a vapour recovery system associated with the vehicle working in opposition of said vapour recovery system of said fuel dispenser and providing a pressure signal to said vapour recovery controller, said dispenser further including a nozzle for dispensing fuel into a vehicle's fuel tank through a filler pipe: and a boot concentrically mounted about said nozzle and configured to sealably engage the vehicle's filler pipe to form a vacuum chamber operatively connected to said vapour recovery system for removing vapours during the fuelling operation.

Two embodiments of the present invention will now be described by way of example only with reference to the accompanying drawings of which:
Figure 1 is an elevational and partial sectional view of a typical gasoline dispenser having a vapour recovery system.
Figure 2 depicts a typical vacuum assist vapour recovery nozzle and the cross section of a fuel tank of a vehicle equipped with onboard recovery vapour recovery.
Figure 3 is an elevational and partial sectional view of a typical gasoline dispenser having a vapour recovery system using a liquid driven vapour pump and an atmospheric vent associated with a vapour passageway.
Figure 4 is a perspective view of a fuel dispenser hose configured for use with a gasoline dispenser having a vapour recovery system.
Figure 5 is a cross-sectional view of a gasoline dispenser hose having a sensor in the vapour return path.
Figure 6 is an enlarged perspective view of a fibre-optic hydrocarbon sensor.
Figure 7 is a cross-sectional view of a vapour return passage having an infrared transmitter and receiver.
Figure 8 is a schematic block diagram of a portion of the gasoline dispenser's vapour recovery control system.
Figure 9 is a perspective view of a module for diverting vapour flow for hydrocarbon sensing.
Figure 10 is an elevational and partial sectional view of a booted fuel dispensing hose and nozzle inserted into a motor vehicle gasoline tank having an onboard vapour recovery system.

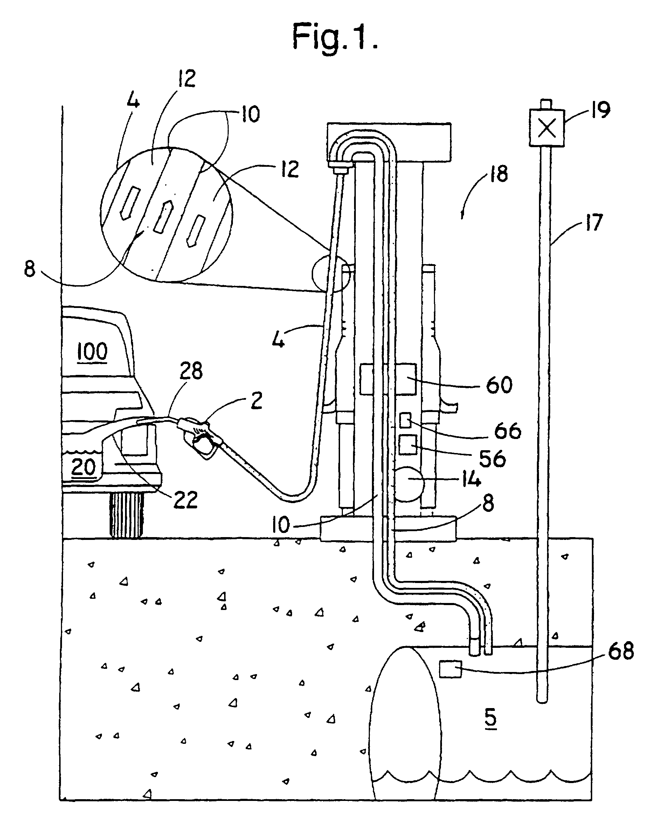

Referring to the drawings and Figure 1 in particular, an automobile 100 is shown being fuelled from a gasoline dispenser or pump 18. A spout 28 of nozzle 2 is shown inserted into a filler pipe 22 of a fuel tank 20 during the refuelling of the automobile 100.

A fuel delivery hose 4 having vapour recovery capability is connected at one end to the nozzle 2, and at its other end to the fuel dispenser 18. As shown by the cutaway view of the interior of the fuel delivery hose 4, an annular fuel delivery passageway 12 is formed within the fuel delivery hose 4 for distributing gasoline pumped from an underground storage tank 5 to the nozzle 2. Also within the fuel delivery hose 4 is a tubular vapour recovery passageway 8, defined by hose 10, for transferring fuel vapours expelled from the vehicle's fuel tank 20 to the underground storage tank 5 during the fuelling of a vehicle that is not equipped with an onboard vapour recovery system. The vapour recovery pump 14 provides a vacuum in the vapour recovery passage 8 for removing fuel vapour during a refuelling operation.

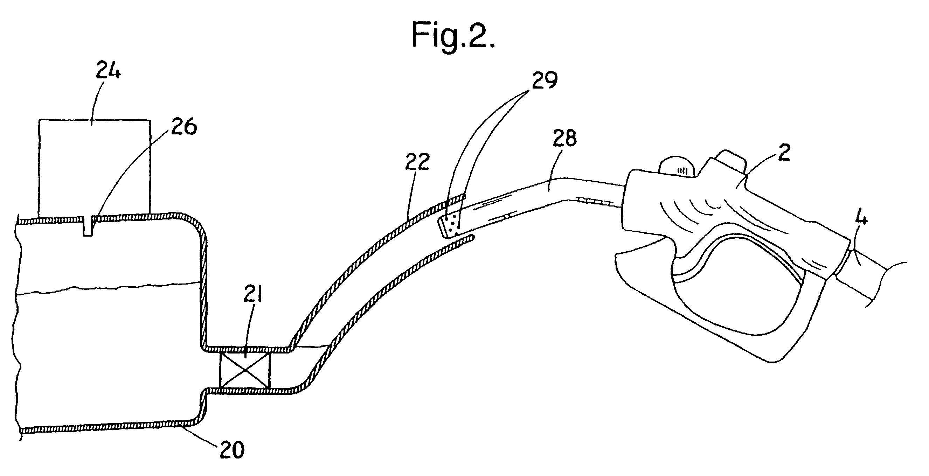

Turning now to Figure 2. the vehicle fuel tank 20 of an ORVR vehicle has an associated onboard vapour recovery system 24. These onboard vapour recovery systems 24 typically have a vapour recovery inlet 26 extending into the tank 20 (as shown) or the filler pipe 22 and communicating with the vapour recovery system 24. In the ORVR system of Figure 2, incoming fuel provides a seal in fill neck 22 to preventing vapours from within the tank 20 to escaping. This sealing action is often referred to as a liquid seal. As the tank fills, pressure within tank 20 increases and forces vapours into the vapour recovery system 24 through the vapour recovery inlet 26. Other ORVR systems may use a check valve 21 along the fill neck 22 to prevent further loss of vapours. The check valve 21 is normally closed and opens when a set amount of gasoline accumulates over the check valve within the fill neck 22.

The spout 28 has numerous apertures 29. The apertures 29 provide an inlet for fuel vapours to enter the vapour recovery path 8 of fuel dispenser 18 from the vehicle's filler pipe 22. As liquid fuel rushes into the fuel tank 20 during a fuelling of a vehicle not equipped with an ORVR system, fuel vapours are forced out of the fuel tank 20 through the fill pipe 22. The fuel dispenser's vapour recovery system pulls fuel vapour through the vapour recovery apertures 29, along the vapour recovery path 8 and ultimately into the underground tank 5 (as shown in Figure 1).

As shown in Figure 1, the underground tank 5 includes a vent 17 and a pressure-vacuum vent valve 19 for venting the underground tank 5 to atmosphere. The vent 17 and vent valve 19 allow the underground tank 5 to breathe in order to substantially equalize the ambient and tank pressures. In typical applications, maintaining tank pressure between the limits of pressure and vacuum is sufficient. Typical ranges of pressure and vacuum will range between +3 inches of water to -8 inches of water.

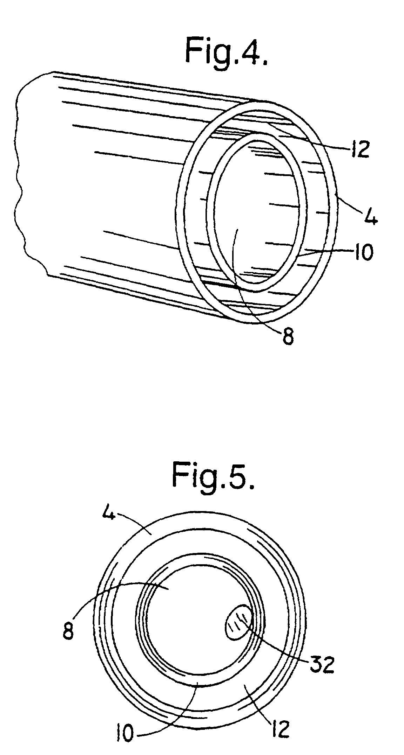

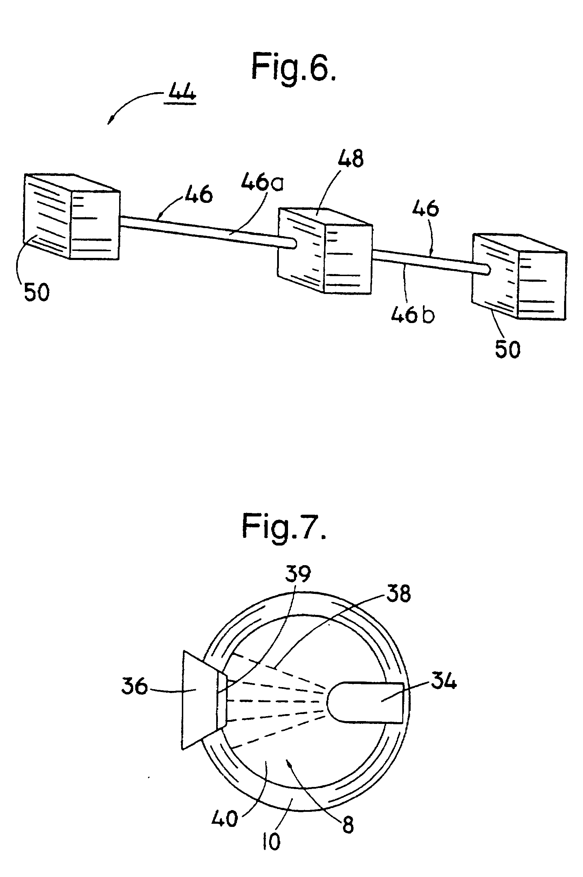

Figures 4 and 5 depict partial and complete cross-sectional views of the fuel dispenser hose 4. In an embodiment of the current invention, a hydrocarbon sensor 32 is placed inside the vapour passage 8 to detect the presence or absence of hydrocarbons associated with fuel vapours. An absence of hydrocarbons in the vapour passage 8 indicates the presence of an onboard vapour recovery system in the vehicle being fuelled. If an onboard system is detected, the dispenser could either shut off the vapour pump 14 completely, or calculate and control the pump 14 to supply the amount of air to the storage tank needed to replenish the volume of liquid taken from the tank 5 and thus eliminate breathing losses. The hydrocarbon sensor 32 may be located anywhere along the vapour recovery passage 8, including within the vapour recovery pump 14. Certain applications will locate the hydrocarbon sensor 32 at either, or both, an inlet or outlet to the vapour recovery pump 14.

In one embodiment, the hydrocarbon sensor 32 is a fibre-optic sensor 44 capable of sensing an amount of hydrocarbons present in the vapour return passage 8. The fibre-optic sensor 44 is shown in detail in Figure 6. Preferably, the fibre-optic sensor 44 uses two fibre-optic light rails 46. a sense fibre 46a and a reference fibre 46b. The sense fibre 46a has a special coating and the reference fibre 46b is isolated. The light rails 46a and 46b run between a single light source 48 and two photodetectors 50. The photodetectors 50 may be photodiodes. The refractive index of the sense fibre 46a changes when in contact with hydrocarbon vapour, causing the fibre to lose light through its surface. This loss of light is proportional to the concentration of hydrocarbon vapour. The amount of light transmitted by the reference fibre 46b is compared to the amount transmitted by the sense fibre 46a. Since they share the same light source 48, any change in the output voltages at the photodetectors 50 can be attributed to the losses from the side of fibre 46a caused by the concentration of the vapour stream.

As seen in Figure 7, another embodiment of the current invention employs an infrared emitter 34 and an infrared detector 36 as a hydrocarbon sensor in the tubing 10. Preferably, the infrared emitter 34 is either a solid state or a black body radiator with an appropriate filter, if required, irradiating through a cross-section of sampled vapour 40 to the infrared detector 36. An optical bandpass filter 39 may be used to narrow the sensor sensitivity to certain wavelengths. The infrared detector 36 is either solid state or pyro-electric infrared (PIR).

The attenuation in the infrared spectrum 38 caused by the absorption of infrared by hydrocarbons is detected by detector 36. When the amount of hydrocarbons to absorb the infrared falls from an expected level during operation, the fuel dispenser may disable or adjust its vapour recovery system.

In the preferred embodiments of the current invention, there is a response time of less than 6 seconds from the beginning of the fuelling operation or within delivering one gallon of fuel before detecting whether fuel vapours are normal, present in abnormally low quantities, or not present. The absence or low concentration of hydrocarbons indicates that the vehicle is equipped with an onboard vapour recovery system.

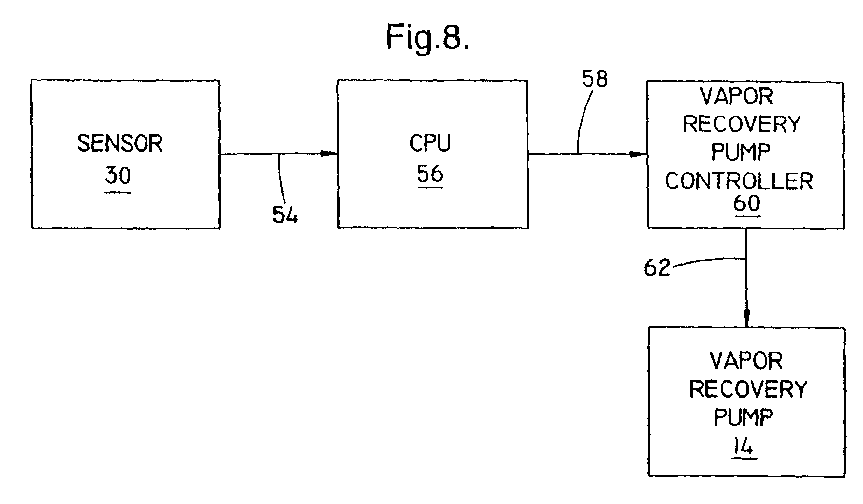

The dispenser electronics, as depicted in block diagram in Figure 8, process a resulting signal 54 from the sensor, whether it be of fibre-optic sensor 44, IR detector 36 or some other sensor, and take appropriate action. The action could take any of several forms. The vapour return pump 14 could slow down in order to reduce the effective vacuum, thereby reducing the effect of vapour growth which the ingestion of clean air often creates. Breathing losses are a major cause of fugitive emissions. If the underground tank pressure is greater than the ambient pressure, hydrocarbon saturated fuel vapour is released into the atmosphere through pressure-vacuum valve 19. In contrast, if the pressure in tank 5 is less than that of the ambient, vent 19 allows fresh air into tank 5 to equalize the pressure. The fresh air becomes saturated with hydrocarbons and increases the pressure within the tank 5 and hydrocarbon laden vapour is then released to ambient through vent 19. As the tank continues to "breathe" in this manner, hydrocarbons are repeatedly released to atmosphere. Thus, it is important to minimize any pressure differential between tank 5 and the atmosphere to prevent the ingestion of air.

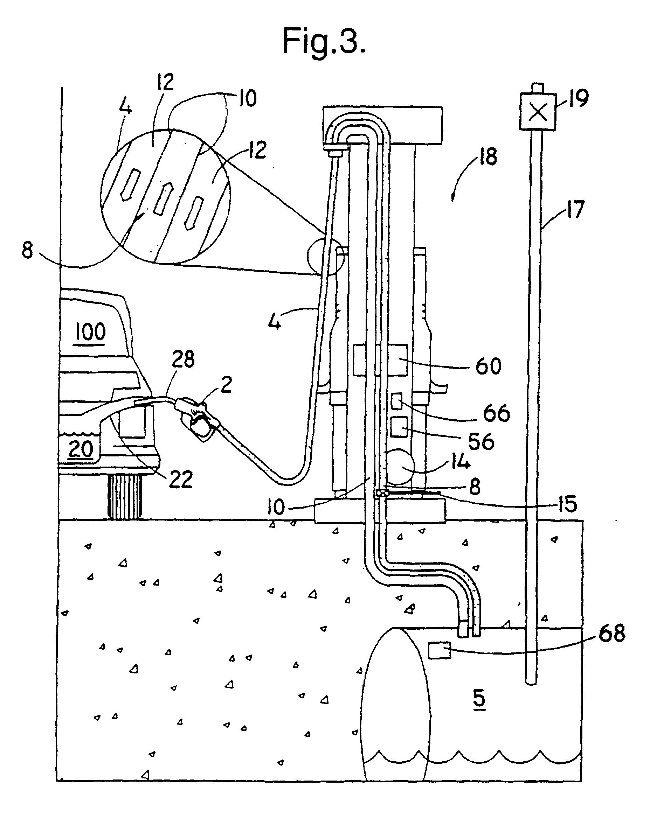

When fuelling a standard or non-ORVR equipped vehicle, the vapour recovery system of fuel dispenser 18 pulls in enough hydrocarbon vapour and air mixture to compensate for the dispensed liquid fuel and minimize breathing losses. When an ORVR equipped vehicle is detected, the dispenser compensates for the vapour recovered by the vehicle's ORVR system by pulling in ambient air.
Upon detection of an ORVR equipped vehicle, slowing down the vapour return pump 14 allows for continuous monitoring of the vapour concentration in the vapour return passage 8 to ensure that a mistake was not made in the initial identification of an onboard vapour recovery system associated with the vehicle. Alternatively, the vapour recovery pump 14 could simply shut down until the next transaction. Other embodiments of the current invention may forego shutting down the fuel dispenser's vapour recovery system. For example, the system may redirect the flow of air from the apertures 29 through vapour passage 8 to ambient through valve 15 (see Figure 3). This may be used when the vapour recovery system of the dispenser 18 uses a liquid driven vapour pump 14. Redirecting flow to ambient will prevent over pressurizing the underground tank and reduce breathing losses.

The various sensors, such as the hydrocarbon sensor 32 or the infrared detection sensor 36 provide a signal 54 to a central processing unit (CPU) 56. The CPU 56 evaluates the signal 54 to determine whether the vehicle being fuelled has an onboard vapour recovery system. Accordingly, the CPU 56 provides a control signal 58 to a vapour recovery pump controller 60. The vapour recovery pump controller 60 then controls the vapour recovery pump 14 with control signal 62.

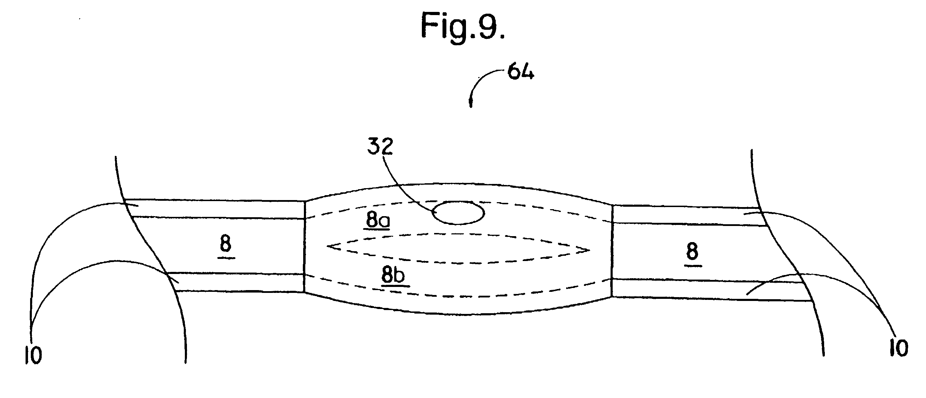

As shown in Figure 9. any of the hydrocarbon sensors 32 may be installed within a separate module 64 designed to divert the flow path of a certain amount of fuel vapours. The module 64 may split the vapour path 8 into two vapour paths 8a, 8b. The hydrocarbon sensor is installed in one vapour path 8b. In the fibre-optic sensor embodiment, vapour path 8b of module 64 may be designed so that only a fraction of the hydrocarbon vapour and air mixture flows over the probe 44.

Once detection of a vehicle equipped with an onboard vapour recovery system occurs, various vapour recovery control options are available. Disabling the fuel dispenser's vapour recovery system reduces underground fuel tank pressure and thereby reduces losses due to fugitive emissions and reduces wear and unnecessary use of assist type vapour recovery systems when operation would be redundant. Alternatively, the dispenser's vapour recovery system is adjusted to reduce the vacuum created by the fuel dispenser during the fuelling of an onboard vapour recovery equipped vehicle. The vapour recovery system provides enough ambient air to the underground tank 5, that when the air saturates, the hydrocarbon saturated air volume is approximately equal to the amount of fuel dispensed; thereby minimizing pressure fluctuation in the underground tanks. Another option, particularly useful with liquid driven vapour pumps, is to use an output of CPU 56 to open valve 15 to redirect the airflow in the vapour recovery passage 8 to atmosphere through the vapour passage vent valve 15 (as shown in Figure 3).

Adjusting the vacuum created by the fuel dispenser's vapour recovery system prevents over pressurizing the underground fuel tanks, thus mitigating fugitive emissions. Fugitive emissions is a collective term for emissions from the vent 19 or any other leak path to the atmosphere at the dispensing facility.

The current invention may adjust the fuel dispenser's vapour recovery system to compensate for both vapour shrink and vapour growth conditions. Typically, during vapour shrink conditions, an amount of air greater than the volume of liquid dispensed is drawn into the tank 5. Vapour shrink conditions usually occur during hot summer months when the ambient temperature is high and the tank temperature is relatively cool. As the air is drawn into the tank, the air contracts. The fuel dispenser compensates for this decrease in volume by increasing the amount of air pulled into the underground tank 5.

In contrast with the vapour shrink conditions, vapour growth conditions typically occur during winter months when the ambient temperature is low and the tank temperature is relatively high. Under vapour growth conditions, the air pulled into the tank expands when subjected to the warmer tank temperatures. The fuel dispenser's vapour recovery system pulls in an amount of air less than the amount of fuel dispensed to compensate for the volume expansion in the tank. The CPU 56 of fuel dispenser 18 may receive temperature data from an ambient temperature sensor 66 and an underground tank temperature sensor 68 (see Figure 1). Alternatively, rough air ingestion compensation may be accomplished by having predefined flow settings for various times of the day or year. For example, the recovery system can be set to ingest air or vapour mixture in an amount equal to two-thirds the volume of fuel dispensed, thus allowing the air or vapour mixture to expand by a factor of approximately 1.4 or 1.5 to fill the tank volume when saturated.

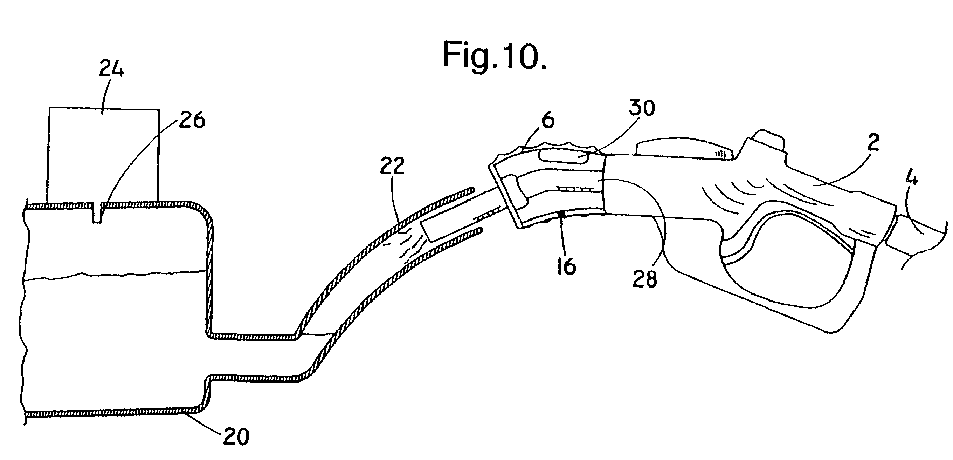

In an alternative embodiment for booted vapour recovery systems, as shown in Figure 10, the nozzle 2 includes a vapour recovery boot 6 for preventing fuel vapours from escaping to atmosphere during the vapour recovery process. The vapour recovery boot 6 of nozzle 2 forms an annular chamber about nozzle 28 and sealably engages the end of filler pipe 22 to prevent the escape of fuel vapours to atmosphere. The annular chamber formed by vapour recovery boot 6 and the nozzle spout 28 operatively communicates with the vapour recovery passage 8. A pressure sensor 30 is placed in the annular chamber formed by the vapour recovery boot 6 and the nozzle spout 28 to detect an increase in vacuum associated with the vehicle's onboard vapour recovery system working in opposition to the fuel dispenser's vapour recovery system. In this embodiment, the increased vacuum may trip the nozzle's automatic shut-off venturi mechanism (not shown) and therefore make fuelling extremely difficult if not impossible. Therefore, it is preferable that the seal between the vapour recovery boot 6 and the filler pipe 22 is only semi-tight and the vapour recovery system is vented via valve 15 to allow normal fuelling.

Additionally, equipping the vapour recovery boot 6 with an orifice 16 designed to allow a vacuum in excess of 20-25 inches to be developed in the fill pipe area when fuelling a vehicle equipped with an onboard vapour recovery system will eliminate premature cut-off. This level of vacuum is high enough to be recognized by the fuelling system, but not enough to trip the automatic shut-off mechanism of the nozzle 2. The increase in the vacuum may be detected by placing the sensor 30 in the boot area as shown, at the vapour recovery pump 14, or anywhere along the vapour recovery passage 8.

## Claims

1. Apparatus for dispensing fuel and detecting a vehicle having a vapour recovery system. the apparatus comprising:
a fuel dispenser configured to deliver fuel to a fuel tank of a vehicle;
a vapour recovery system operatively associated with said fuel dispenser having a vapour path for removing fuel vapour expelled from the fuel tank of the vehicle during a fuelling operation and a vapour recovery controller; and
a vapour sensor associated with said vapour path for sensing the fuel vapours in said vapour path and providing a vapour signal to said vapour recovery controller, said controller being adapted to determine whether or not the vehicle has a vapour recovery system and modify the vapour recovery rate in dependance thereon.

2. Apparatus as claimed in claim 1 wherein the controller is arranged to determine whether the vehicle has an onboard vapour recovery system from the vapour level sensed by said detector.

3. Apparatus as claimed in claim 1 or 2 wherein said vapour sensor is a hydrocarbon sensor.

4. Apparatus as claimed in any preceding claim wherein said vapour recovery controller is configured to adjust said vapour recovery rate according to said vapour signal.

5. Apparatus as claimed in any preceding claim further comprising a vent for venting said vapour path to atmosphere upon detection of a vehicle having a vapour recovery system.

6. Apparatus as claimed in any preceding claim wherein said dispenser's vapour recovery system continues to monitor vapours in said vapour path after detection of a vehicle having a vapour recovery system and resumes normal vapour recovery if the vapour recovery system of the vehicle malfunctions.

7. Apparatus as claimed in claim 4 wherein said controller is configured to adjust vapour recovery to pull in an amount of air or hydrocarbon vapour mixture to reduce breathing losses from a tank from which said fuel is received by said dispenser.

8. Apparatus as claimed in any preceding claim wherein said vapour recovery system is adjusted by said vapour recovery controller in a manner to assist vapour recovery during the fuelling operation upon the sensing of a vehicle having a vapour recovery system, whereby the respective vapour recovery systems operate in conjunction to maximize fuel vapour recovery.

9. Apparatus as claimed in any one of claims 1 to 5 wherein said controller is configured to shut-off vapour recovery if a vehicle having a vapour recovery system is detected.

10. Apparatus for dispensing fuel and detecting a vehicle having a vapour recovery system comprising:
a fuel dispenser configured to deliver fuel to a fuel tank of a vehicle;
a vapour recovery system having a vapour recovery path operatively associated with said fuel dispenser for removing fuel vapour expelled from the fuel tank of the vehicle during a fuelling operation and a vapour recovery controller; and
a pressure sensor operatively associated with said fuel dispenser for sensing an increase in vacuum in said vapour recovery path due to a vapour recovery system associated with the vehicle working in opposition of said vapour recovery system of said fuel dispenser and providing a pressure signal to said vapour recovery controller.

11. Apparatus as claimed in claim 10 wherein said fuel dispenser further includes
a nozzle for dispensing fuel into a vehicle's fuel tank through a filler pipe; and
a boot concentrically mounted about said nozzle and configured to sealably engage the vehicle's filler pipe to form a vacuum chamber operatively connected to said vapour recovery system for removing vapours during the fuelling operation.

12. Apparatus as claimed in claims 10 or 11 wherein said fuel dispenser further includes an automatic shut-off associated with said nozzle for stopping fuel flow when the vacuum reaches a predetermined threshold and said boot includes an orifice limiting the increase in vacuum to a level above which said pressure sensor can detect the vehicle's vapour recovery system and below which will cause activation of the automatic shut-off.

13. Apparatus as claimed in any one of claims 10 to 12 wherein said vapour recovery system is adjusted during the fuelling operation upon the sensing of a vehicle having a vapour recovery system.

## Patentansprüche

1. Vorrichtung zur Abgabe von Kraftstoff und zur Detektion eines Fahrzeugs mit einem Dampfrückgewinnungssystem, wobei die Vorrichtung umfasst:
eine Kraftstoffabgabeeinrichtung, die derart ausgebildet ist, um Kraftstoff an einen Kraftstofftank eines Fahrzeugs zu liefern;
ein Dampfrückgewinnungssystem, das wirksam mit der Kraftstoffabgabeeinrichtung in Verbindung steht und einen Dampfweg zur Entfernung von Kraftstoffdampf aufweist, der von dem Kraftstofftank des Fahrzeugs während eines Betankungsvorganges ausgestoßen wird, und mit einer Dampfrückgewinnungssteuerung in Verbindung steht; und
einen Dampfsensor, der mit dem Dampfweg zur Erfassung der Kraftstoffdämpfe in dem Dampfweg in Verbindung steht und ein Dampfsignal an die Dampfrückgewinnungssteuerung liefert, wobei die Steuerung derart ausgebildet ist, um zu bestimmen, ob das Fahrzeug ein Dampfrückgewinnungssystem besitzt, und die Dampfrückgewinnungsrate in Abhängigkeit davon zu modifizieren.

2. Vorrichtung nach Anspruch 1, wobei die Steuerung so ausgebildet ist, um aus dem Dampfniveau, das durch den Detektor erfasst wird, zu bestimmen, ob das Fahrzeug ein Dampfrückgewinnungssystem an Bord besitzt.

3. Vorrichtung nach Anspruch 1 oder 2, wobei der Dampfsensor ein Kohlenwasserstoffsensor ist.

4. Vorrichtung nach einem der vorhergehenden Ansprüche, wobei die Dampfrückgewinnungssteuerung so ausgebildet ist, um die Dampfrückgewinnungsrate gemäß dem Dampfsignal einzustellen.

5. Vorrichtung nach einem der vorhergehenden Ansprüche, ferner mit einer Entlüftung zum Entlüften des Dampfweges an die Atmosphäre bei Detektion eines Fahrzeugs mit einem Dampfrückgewinnungssystem.

6. Vorrichtung nach einem der vorhergehenden Ansprüche, wobei das Dampfrückgewinnungssystem der Abgabeeinrichtung fortfährt, Dämpfe in dem Dampfweg nach einer Detektion eines Fahrzeugs mit einem Dampfrückgewinnungssystem zu überwachen, und eine normale Dampfrückgewinnung wieder aufnimmt, wenn das Dampfrückgewinnungssystem des Fahrzeugs Fehlfunktionen aufweist.

7. Vorrichtung nach Anspruch 4, wobei die Steuerung so ausgebildet ist, um die Dampfrückgewinnung derart einzustellen, dass eine Menge an Luft- oder Kohlenwasserstoffdampfmischung eingezogen wird, um Atmungsverluste von einem Tank zu verringern, von dem der Kraftstoff durch die Abgabeeinrichtung aufgenommen wird.

8. Vorrichtung nach einem der vorhergehenden Ansprüche, wobei das Dampfrückgewinnungssystem durch die Dampfrückgewinnungssteuerung auf eine Art und Weise eingestellt wird, um eine Dampfrückgewinnung während des Betankungsvorganges bei der Erfassung eines Fahrzeugs mit einem Dampfrückgewinnungssystem zu unterstützen, wodurch die jeweiligen Dampfrückgewinnungssysteme zusammenwirken, um eine Kraftstoffdampfrückgewinnung zu maximieren.

9. Vorrichtung nach einem der Ansprüche 1 bis 5, wobei die Steuerung so ausgebildet ist, um eine Dampfrückgewinnung abzuschalten, wenn ein Fahrzeug mit einem Dampfrückgewinnungssystem detektiert ist.

10. Vorrichtung zur Abgabe von Kraftstoff und zur Detektion eines Fahrzeugs mit einem Dampfrückgewinnungssystem mit:
einer Kraftstoffabgabeeinrichtung, die so ausgebildet ist, um Kraftstoff an einen Kraftstofftank eines Fahrzeugs zu liefern;
einem Dampfrückgewinnungssystem mit einem Dampfrückgewinnungsweg, der wirksam mit der Kraftstoffabgabeeinrichtung in Verbindung steht, um Kraftstoffdampf, der von dem Kraftstofftank des Fahrzeugs während eines Betankungsvorganges ausgestoßen wird, zu entfernen, und mit einer Dampfrückgewinnungsteuerung; und
einem Drucksensor, der wirksam mit der Kraftstoffabgabeeinrichtung in Verbindung steht, um einen Anstieg eines Vakuums in dem Dampfrückgewinnungsweg infolge eines Dampfrückgewinnungssystems in Verbindung mit dem Fahrzeug zu erfassen, das dem Dampfrückgewinnungssystem der Kraftstoffabgabeeinrichtung entgegenwirkt, und der ein Drucksignal an die Dampfrückgewinnungssteuerung liefert.

11. Vorrichtung nach Anspruch 10, wobei die Kraftstoffabgabeeinrichtung ferner umfasst:
einen Zapfhahn, um Kraftstoff in einen Kraftstofftank eines Fahrzeugs durch ein Füllrohr abzugeben, und
eine Manschette, die konzentrisch um den Zapfhahn befestigt und derart ausgebildet ist, um abdichtend mit dem Füllrohr des Fahrzeugs in Eingriff zu treten und damit eine Vakuumkammer zu bilden, die wirksam mit dem Dampfrückgewinnungssystem verbunden ist, um Dämpfe während des Betankungsvorganges zu entfernen.

12. Vorrichtung nach einem der Ansprüche 10 oder 11, wobei die Kraftstoffabgabeeinrichtung ferner eine automatische Abschaltung in Verbindung mit dem Zapfhahn umfasst, um eine Kraftstoffströmung zu stoppen, wenn das Vakuum eine vorbestimmte Schwelle erreicht, und wobei die Manschette eine Öffnung umfasst, die die Erhöhung des Vakuums auf ein Niveau begrenzt, oberhalb dem der Drucksensor das Dampfrückgewinnungssystem des Fahrzeugs detektieren kann und unterhalb dem eine Aktivierung der automatischen Abschaltung bewirkt wird.

13. Vorrichtung nach einem der Ansprüche 10 bis 12, wobei das Dampfrückgewinnungssystem während des Betankungsvorganges bei der Erfassung eines Fahrzeugs mit einem Dampfrückgewinnungssystem eingestellt wird.

## Revendications

1. Appareil de distribution de carburant et de détection d'un véhicule équipé d'un système de récupération de vapeurs, l'appareil comprenant :
un distributeur de carburant configuré pour distribuer du carburant dans le réservoir de carburant d'un véhicule ;
un système de récupération de vapeurs associé de façon opérationnelle au dit distributeur de carburant ayant une trajectoire de vapeurs afin d'évacuer les vapeurs de carburant qui s'échappent du réservoir de carburant du véhicule durant une opération de remplissage de carburant, ainsi qu'un contrôleur de récupération de vapeurs ; et
un détecteur de vapeurs associé à ladite trajectoire de vapeurs afin de détecter les vapeurs de carburant dans ladite trajectoire de vapeurs et de fournir un signal de vapeurs au dit contrôleur de récupération de vapeurs, ledit contrôleur étant adapté pour déterminer si le véhicule est équipé, ou non, d'un système de récupération de vapeurs et étant adapté pour modifier le taux de récupération de vapeurs en fonction de ceci.

2. Appareil selon la revendication 1 dans lequel le contrôleur est configuré pour déterminer si le véhicule est équipé, ou non, d'un système de récupération de vapeurs embarqué, à partir du niveau de vapeurs détecté par ledit détecteur.

3. Appareil selon la revendication 1 ou 2 dans lequel ledit détecteur de vapeurs est un détecteur d'hydrocarbures.

4. Appareil selon l'une quelconque des revendications précédentes dans lequel ledit contrôleur de récupération de vapeurs est configuré pour ajuster ledit taux de récupération de vapeurs en fonction dudit signal de vapeurs.

5. Appareil selon l'une quelconque des revendications précédentes comprenant en outre un orifice d'évacuation pour évacuer ladite trajectoire de vapeurs dans l'atmosphère lorsque le véhicule est détecté comme étant équipé d'un système de récupération de vapeurs.

6. Appareil selon l'une quelconque des revendications précédentes dans lequel ledit système de récupération de vapeurs du distributeur continue de surveiller les vapeurs dans ladite trajectoire de vapeurs après qu'un véhicule étant équipé d'un système de récupération de vapeurs est tombé en panne, et interrompt la récupération normale de vapeurs si le système de récupération de vapeurs du véhicule ne fonctionne pas correctement.

7. Appareil selon la revendication 4 dans lequel ledit contrôleur est configuré pour ajuster la récupération de vapeurs afin d'aspirer une certaine quantité d'air ou de mélange de vapeurs d'hydrocarbures de manière à réduire les pertes par respiration d'un réservoir à partir duquel ledit carburant est reçu par ledit distributeur.

8. Appareil selon l'une quelconque des revendications précédentes dans lequel ledit système de récupération de vapeurs est ajusté par ledit contrôleur de récupération de vapeurs d'une façon qui permet de faciliter la récupération de vapeurs durant l'opération de remplissage de carburant lorsque le véhicule est détecté comme étant équipé d'un système de récupération de vapeurs, moyennant quoi les systèmes de récupération de vapeurs respectifs fonctionnent en conjonction afin d'optimiser la récupération de vapeurs de carburant.

9. Appareil selon l'une quelconque des revendications 1 à 5 dans lequel ledit contrôleur est configuré pour arrêter la récupération de vapeurs si un véhicule est détecté comme étant équipé d'un système de récupération de vapeurs.

10. Appareil de distribution de carburant et de détection d'un véhicule équipé d'un système de récupération de vapeur comprenant :
un distributeur de carburant configuré pour distribuer du carburant dans le réservoir de carburant d'un véhicule ;
un système de récupération de vapeurs ayant une trajectoire de vapeurs associée de façon opérationnelle au dit distributeur de carburant afin d'évacuer les vapeurs de carburant qui s'échappent du réservoir de carburant du véhicule durant une opération de remplissage de carburant, ainsi qu'un contrôleur de récupération de vapeurs ; et
un détecteur de pression associé de façon opérationnelle au dit distributeur de carburant pour détecter une augmentation du volume de vide de ladite trajectoire de récupération de vapeurs en raison d'un système de récupération de vapeurs associé avec le véhicule, fonctionnant d'une manière opposée par rapport au dit système de récupération de vapeurs dudit distributeur de carburant et fournissant un signal de pression au dit contrôleur de récupération de vapeurs.

11. Appareil selon la revendication 10 dans lequel ledit distributeur de carburant comprend en outre :
une buse pour distribuer le carburant dans le réservoir de carburant d'un véhicule, par l'intermédiaire d'un tuyau de remplissage ; et
un soufflet monté concentriquement autour de ladite buse et configuré pour s'engager de façon hermétique dans le tuyau de remplissage du véhicule pour former une chambre à dépression connectée de façon opérationnelle au dit système de récupération de vapeurs afin d'évacuer les vapeurs durant l'opération de remplissage de carburant.

12. Appareil selon la revendication 10 ou 11 dans lequel ledit distributeur de carburant comprend en outre un dispositif d'arrêt automatique associé à ladite buse afin d'interrompre l'écoulement du carburant lorsque le volume de vide atteint un seuil prédéterminé, et dans lequel ledit soufflet comprend un orifice limitant l'augmentation du niveau de vide à un niveau au-dessus duquel ledit détecteur de pression peut détecter le système de récupération de vapeurs du véhicule et au-dessous duquel il provoque l'activation du dispositif d'arrêt automatique.

13. Appareil selon l'une quelconque des revendications 10 à 12 dans lequel ledit système de récupération de vapeurs est ajusté durant l'opération de remplissage de carburant lorsque le véhicule est détecté comme étant équipé d'un système de récupération de vapeurs.
